# EUROPEAN PATENT APPLICATION

(11) **EP 1 679 662 A2**
(43) Date of publication of application: **12.07.2006**
(21) Application number: 05252680.3
(22) Date of filing: 28.04.2005
(51) Int. Cl.: G06T 17/20

(54) **Vertex reduction graphic drawing method and device**

(30) Priority: 05.01.2005 JP 2005001025
(71) Applicant: FUJITSU LIMITED, Kawasaki-shi, Kanagawa 211-8588 (JP)
(72) Inventor: Yamauchi, Hideaki, c/o Fujitsu Limited, Kawasaki-shi, Kanagawa 211-8588 (JP)
(74) Representative: Hitching, Peter Matthew

(57) **Abstract**

In a bird's eye view or the like, performance degrades due to a too high vertex density, and as a result, beauty is ruined. In order to solve such problems, an amount of features is calculated(5) based on the relative position of the previously drawn vertex and a closely located vertex to it. Then, if the amount of features meets a specific threshold condition, the relevant vertex is eliminated (6) from drawing targets, and a vertex the amount of features of which does not meet the threshold conditions specified(6) as a subsequent drawing target.

## Description

### Background of the Invention

### Field of the Invention

The present invention relates to a device capable of connecting a plurality of vertex coordinates and drawing a polyline or a polygon.

### Description of the Related Art

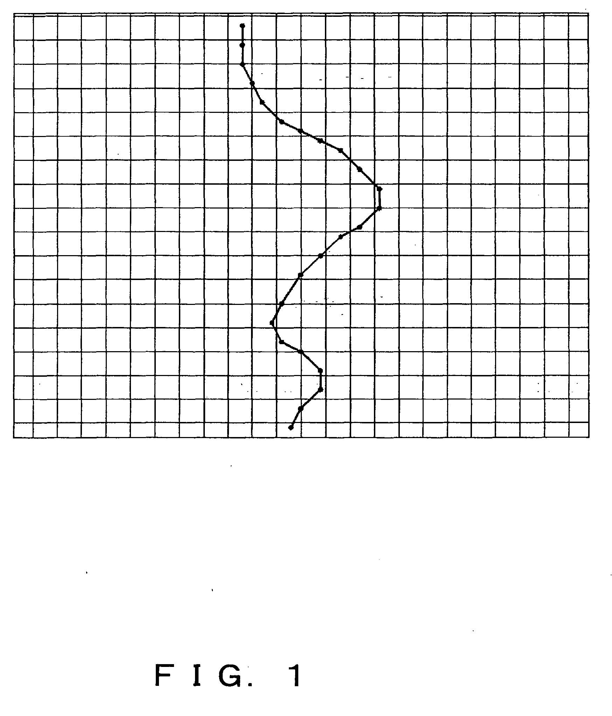

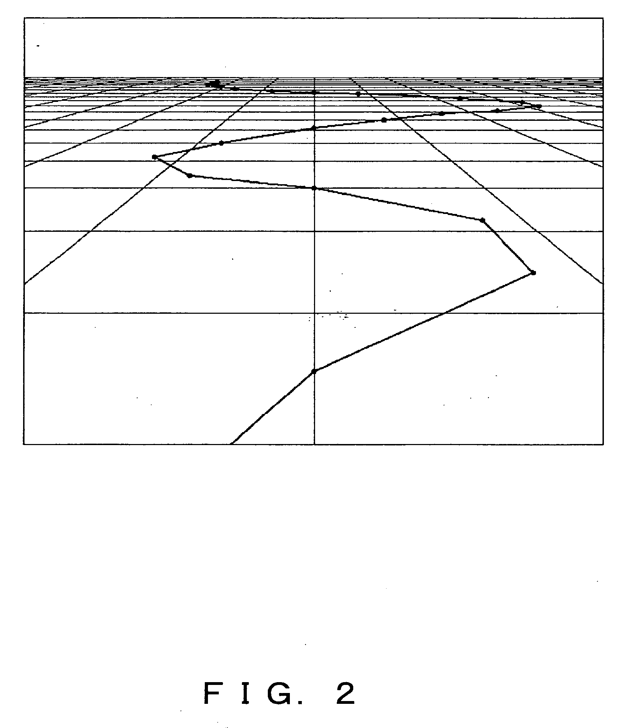

In map drawing represented by, for example, a car navigation system, a process of providing a lot of vertex coordinates and drawing a polyline or a polygon is usually performed. As shown in Fig. 1, when a map is viewed from top and displayed two-dimensionally, vertex density is predictable beforehand, and the degree of details of a map database can be switched according to a reduced scale. However, if the map shown in Fig. 1 is inclined and displayed as a bird' s eye view, as shown in Fig. 2, vertex density in a near side looks low and one in a far side looks high. Thus, vertex density on the same screen cannot be unified, and the degree of details of a map database cannot be effectively switched. As clear when comparing Fig. 1 with Fig. 2, in a bird's eye display shown in Fig. 2, in a near view, a narrow spot is enlarged and high precision is needed. In a far-side view, a wide spot is crowded, and no data processing is possible unless precision is reduced. This change of the degree of detail in a direction from a near side to a far side is consecutive.

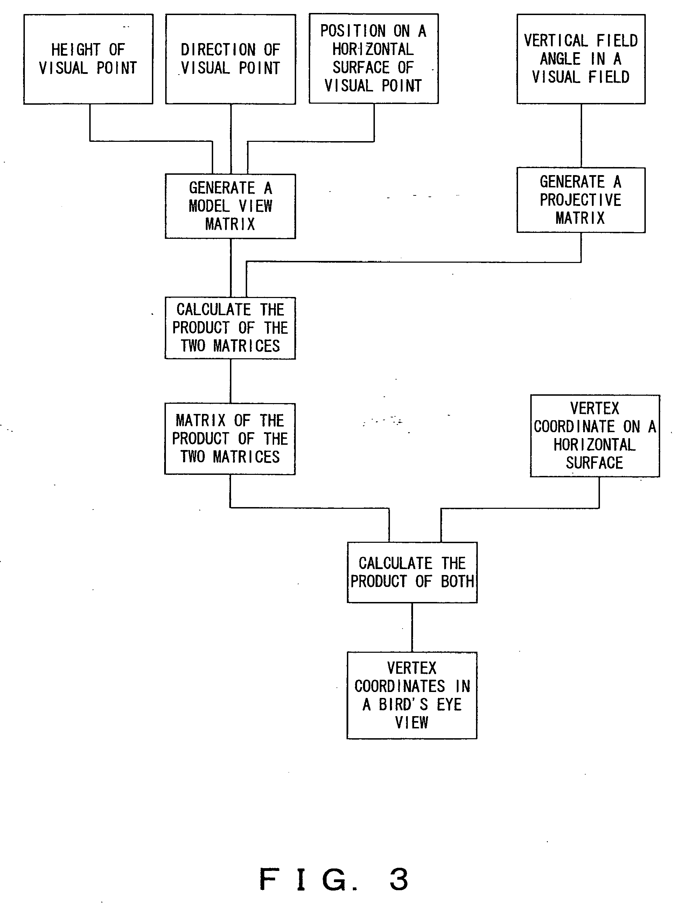

A transformation process from Fig. 1 to Fig. 2 is described below. Fig. 3 explains the function of a process for transforming and displaying a segment or polygon, obtained by connecting a plurality of given vertex coordinates in a bird's eye view.

Transformation by a matrix with four rows and four columns which is popular in computer graphics is performed. In this case, a plane including grids in Figs. 1 and 2 indicates a ground surface. The visual point of the bird's eye view shown in Fig. 2 is positioned 2m high from the ground, and is inclined downward by 15 degrees against a horizontal direction parallel to the ground. A publicly known model view matrix can be obtained based on these numeric values and the positional coordinates on the horizontal surface. The vertical field angle of the visual point of Fig. 2 in a view field is 35 degrees, and a publicly known projective matrix is obtained using these numeric values as main conditions. Fig. 1 is transformed into Fig. 2 by multiplying a matrix obtained multiplying the projective matrix by the model view matrix, by vertex coordinates represented by black points.

Due to the above-mentioned characteristic of a bird's eye view, the following problems occur.

Firstly, useless performance degradation occurs due to the application of a drawing process to a vertex meaningless as an image due to too high density.

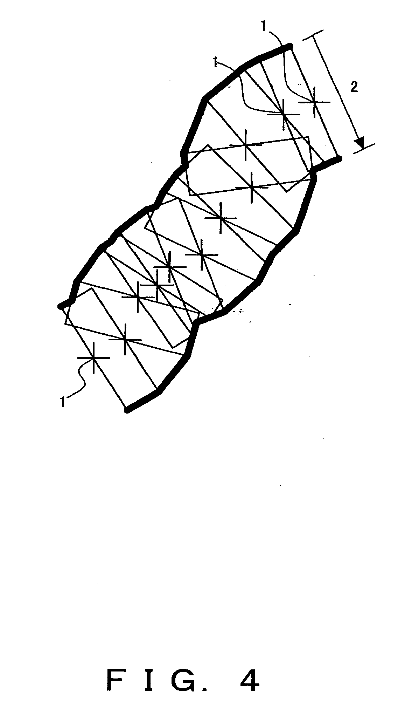

Secondly, for example, in the case of bold line drawing shown in Fig. 4, since the density of a vertex 1 is too high, the width 2 of a segment is not uniform and the beauty of the segment is remarkably spoiled. In polygon too, outlines are ruined and its beauty is remarkably spoiled.

The reference literature disclosing technologies related to the present invention are shown.

Patent reference 1 discloses a bold line drawing method in a car navigation device and the like.

Patent reference 2 discloses a graphic drawing method for dividing a graphic, such as a geometric information distribution map or the like into uniform quadrangular meshes, obtaining the grating points (vertices) of meshes to which the graphic and drawing a segment sequentially connecting a plurality of vertex data.

However, neither of them discloses problems caused their too high vertex density.
Patent reference 1:
Japanese Published Patent Application No. 2000-194353
Patent reference 2:
Japanese Published Patent Application No. 2000-172830

### Summary of the Invention

The problem to be solved by the present invention is that performance degrades in a bird' s eye view display and the beauty of a graphic is spoiled, since vertex density is too high.

It is an object of the present invention to solve the problem by calculating the amount of characteristic, based on the relative position of the previously drawn vertex and a closely located vertex to it, excluding the relevant vertex from drawing targets if the amount of characteristic meets a specific threshold condition and specifying a vertex the amount of characteristic of which does not meet it as a subsequent drawing target.

According to the present invention, performance can be improved by omitting vertices meaningless as an image due to too high density.
Furthermore, by omitting some of vertices with too high density, a beautiful segment with uniform width and a beautiful polygon without ruined outlines can be obtained.

### Brief Description of the Drawings

Fig. 1 is a map for explaining a problem to be solved by the present invention.
Fig. 2 is its bird's eye view for explaining the problem to be solved by the present invention.
Fig. 3 shows a process for transforming and displaying given vertex coordinates in a bird's eye view.
Fig. 4 explains conventional bold line drawing.
Fig. 5 shows the basic configuration of the vertex reduction graphic drawing device of the present invention.
Figs. 6A explains the first preferred embodiment of the present embodiment.
Figs. 6B explains the first preferred embodiment of the present embodiment.
Fig. 7 explains the first preferred embodiment of the present embodiment.
Fig. 8 explains the first preferred embodiment of the present embodiment.
Fig. 9 is the segment drawing flowchart of the first preferred embodiment.
Fig. 10 is the functional block diagram of the first preferred embodiment.
Fig. 11 explains the second preferred embodiment of the present invention.
Fig. 12 explains the second preferred embodiment of the present embodiment.
Fig. 13 explains the third preferred embodiment of the present embodiment.
Fig. 14 explains the third preferred embodiment of the present embodiment.
Fig. 15 explains the fourth preferred embodiment of the present embodiment.
Fig. 16 explains the fourth preferred embodiment of the present embodiment.
Fig. 17 explains the fourth preferred embodiment of the present embodiment.
Fig. 18 explains the fifth preferred embodiment of the present embodiment.
Fig. 19 explains the fifth preferred embodiment of the present embodiment.
Fig. 20 explains the sixth preferred embodiment of the present embodiment.
Fig. 21 explains the sixth preferred embodiment of the present embodiment.
Fig. 22 explains the seventh preferred embodiment of the present embodiment.
Fig. 23 explains the eighth preferred embodiment of the present embodiment.
Fig. 24 shows the configuration of the means for changing a threshold condition/a threshold distance of the present invention.

### Description of the Preferred Embodiments

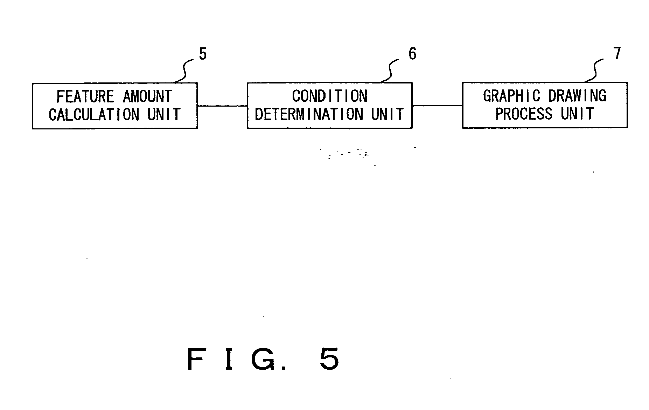

Fig. 5 shows the basic configuration of the vertex reduction graphic drawing device of the present invention. The present invention comprises features amount calculation unit 5 for calculating the amount of characteristic calculated, for example, based on the relative position of consecutive two vertices. For the amount of features, a straight distance between two vertices, horizontal and vertical distances between two vertices or the like are used.

The present invention further comprises a condition determination unit 6 for performing a conditional determination using the amount of features. For the condition determination, the fact that the straight distance between two vertices is equal to or less than a predetermined value, the fact that each of horizontal and vertical distances between two vertices is equal to or less than a predetermined value, the fact that the sum of horizontal and vertical distances between two vertices is equal to or less than a predetermined value or the like is used.

Furthermore, the present invention comprises a graphic processing unit 7 for omitting the drawing process of one the two vertices, based on the result of the above-mentioned condition determination.

Each preferred embodiment is described below while comparing before omitting some vertices with after omitting them.

### <The first preferred embodiment>

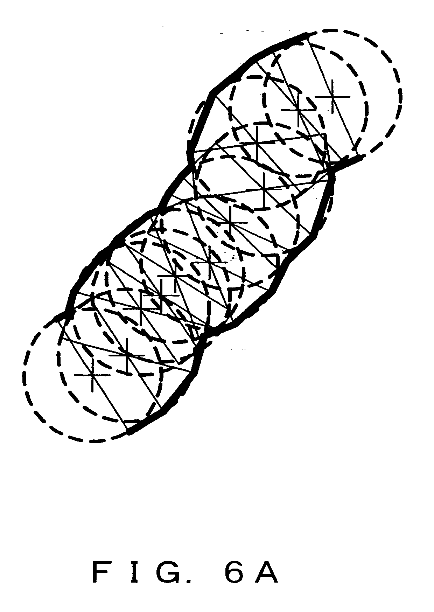

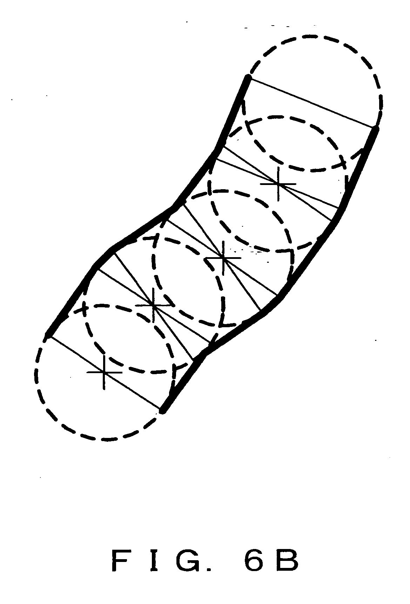

The first preferred embodiment of the present invention is described below with reference to Figs. 6A, B~10. In the first preferred embodiment, a straight distance between two vertices is used for the amount of characteristic to be calculated based on the relative position of the two vertices positions.

In Fig. 6A, a circle whose center is each vertex coordinate position and whose diameter is half of the width of a segment is overlapped on a polyline to be drawn. Since a plurality of vertices exists in a circle, vertices are closely collected. As clear from Fig. 6A, the widths of the segment is not uniform and its outlines are ruined.

In Fig. 6B, some of the closely collected vertices of a segment shown in Fig. 6A are omitted in such a way that only one vertex may exist in one circle, specifically, that a straight distance between two closely located vertices may be half of the width of the segment. In this case, as clear from Fig. 6B, the width of the segment is uniform and beauty is improved.

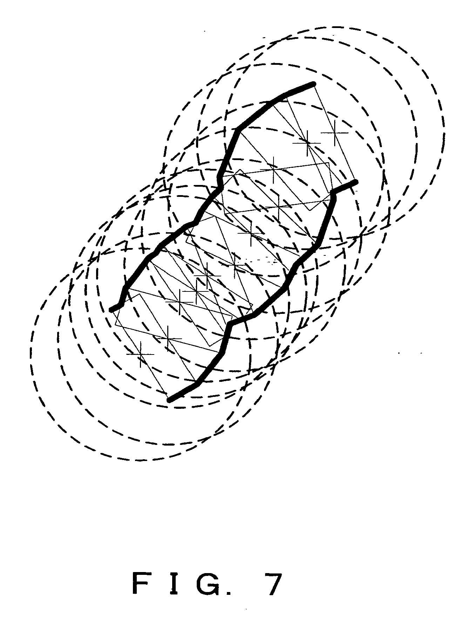

Fig. 7 shows the same state as Fig. 6A. The difference from Fig. 6A is that the diameter of a circle is equal to the width of a segment and is not half of the width.

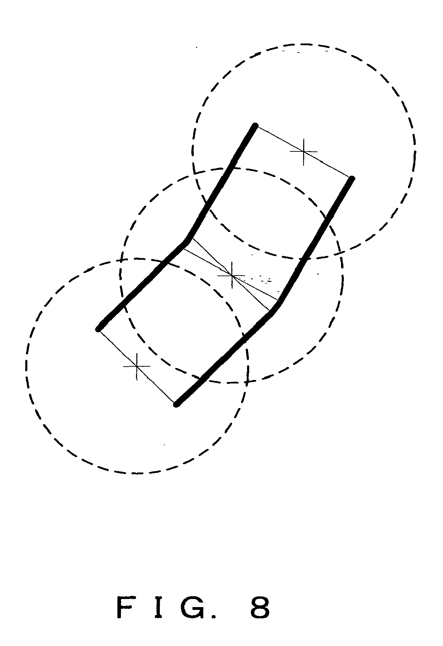

Fig. 8 shows a polyline in which some of the closely collected vertices shown in Fig. 7 are omitted in such a way that only one vertex may exist in one circle. As clear from Fig. 8, the width of a segment is uniform and beauty is improved. In this case, more vertices than in Fig. 6B are omitted.

It is geometrically found that if a straight distance between two vertices, that is, the diameter of a circle is larger than half of the width of a segment, the width of the segment can be uniformly drawn.

Geometrically speaking, in the first preferred embodiment, an area which is a boundary for determining about whether a specific vertex should be omitted is defined using a circle.

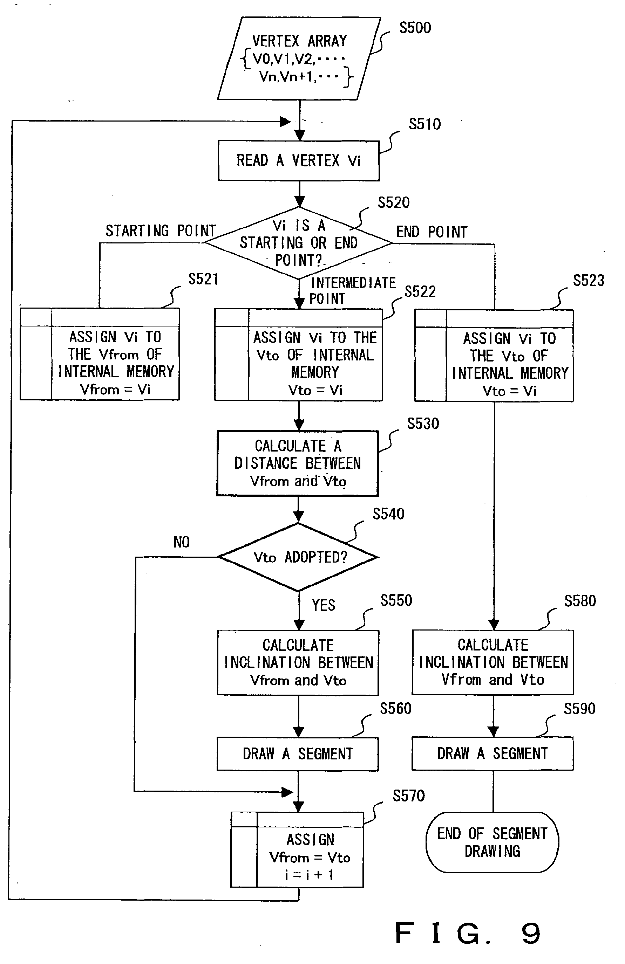

Fig. 9 is a flowchart showing a vertex omitting process in the case where a plurality of vertex coordinates is sequentially given.

When as in this preferred embodiment, a vertex omitting condition is determined based on a straight distance between two vertices, it is mathematically processed as follows.

Firstly, vertex coordinate strings are given as (Xo, y₀), (x₁, y₁), ..., (xₙ₋₁, yₙ₋₁), (xₙ, yₙ), (xₙ₊₁, yₙ₊₁) and so on. No starting point (x₀, y₀) is omitted from drawing targets, and condition determination is applied to the next (x₁, y₁) and after.

Firstly, a horizontal distance dₓ and a vertical distance d_{y} are calculated using a difference between the coordinate values of two consecutive vertices. Specifically, dₓ = x₁ - x₀ and d_{y} = y₁ - y₀. Then, a straight distance r between two vertices is calculated. Specifically, r =(dₓ² + d_{y}²)^{1/2}. Then, the shortest possible distance rₘᵢₙ is compared with r. A typical rₘᵢₙ is, for example, the same length as a segment width, half of the length of the segment width. If r > rₘᵢₙ, the two vertices are sufficiently separated in a straight line. Therefore, (x₁, y₁) is not omitted, and a straight distance r between (x₁, y₁) and (x₂, y₂) is calculated as a subsequent step. If r < rₘᵢₙ, the straight distance between the two vertices is too short. Therefore, (x₁, y₁) is omitted, and a straight distance r between (x₀, y₀) and (x₂, y₂) is calculated as a subsequent step.

Next, the process that is shown in the flowchart of Fig. 9 and performed by graphic drawing device of the present invention is described.

Firstly, in step S500, a vertex array is inputted, and in step S510, vertices Vᵢ are sequentially read from the vertex array. Then, in step 5520, it is determined whether each vertex Vᵢ is a starting point, an intermediate point or an end point.

If the relevant vertex is a staring point, in step S521, the vertex Vᵢ is assigned to the V_{from} of internal memory. Then, the process returns to step S510, and a subsequent vertex is read.

If the vertex is an intermediate point, a distance between V_{from} and Vₜₒ is mathematically calculated.

If the vertex is an end point, it is left without being omitted, and in step S523, it is assigned to the Vₜₒ of the internal memory. Then, in step S580, an inclination between V_{from} and Vₜₒ is calculated, and in step S590, the segment is drawn and the process terminates.

In the case of a polygon, the end point is the same as the starting point, and the end point must be drawn. However, as to polylines other than a polygon, the end point can also be omitted according to the result of the condition determination like the intermediate point.

As for Vₜₒ, which is the intermediate point of a vertex, after in step S530, a distance from V_{from} is calculated, in step S540, condition determination about whether to omit it is performed. If it is determined to adopt Vₜₒ, the process proceeds to step S550 and the inclination between V_{from} and Vₜₒ is calculated. Then, in step S560, a segment is drawn, and the process proceeds to step S570.

If it is not determined to adopt Vₜₒ, that is, to omit it, the process directly proceeds to step S570.

In step S570, Vₜₒ is assigned to V_{from}, and "i" is incremented. Then, the process returns to step S510, and a subsequent vertex is read. Then, the determination process in step S520 is repeated.

It is clear that the process shown in the flowchart of Fig. 9 can be performed by a computer program. It is also clear that the exemplified flowchart can be properly modified to achieve the same object.

It is also clear that the calculation process in step S530 can be modified according to a value adopted as the amount of characteristic related to a distance between two vertices.

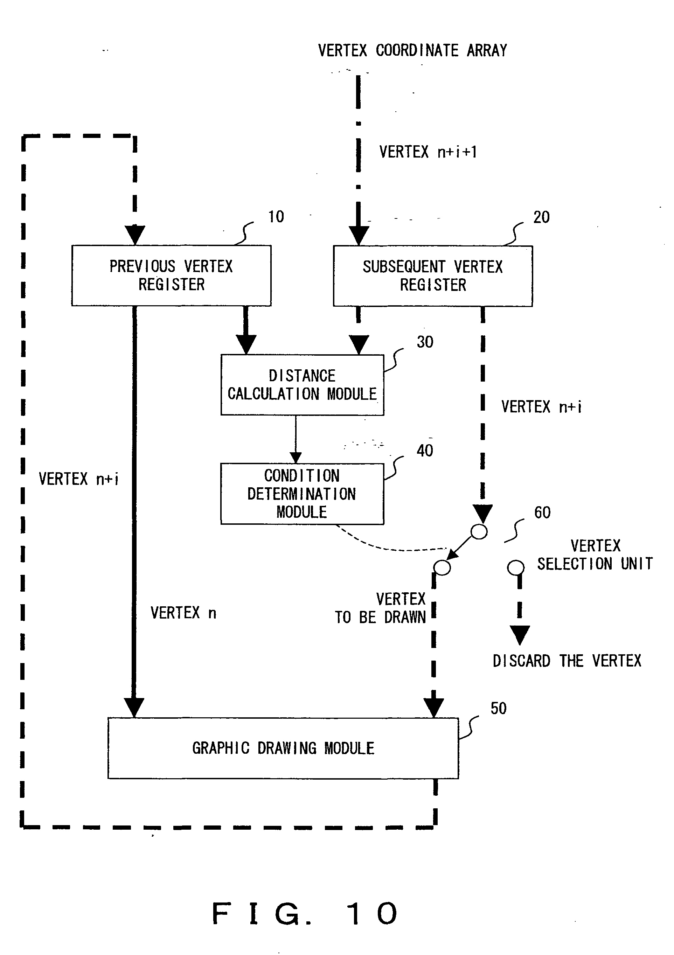

Fig. 10 is the functional block diagram of a device provided with the present invention.

Two vertex coordinates can be stored by a preceding vertex register 10 and a following vertex register 20. The previous register 10 and subsequent register 20 can also be shared with a general register used to draw graphics.

A distance calculation module 30 calculates a distance between two vertices stored by the previous vertex register 10 and subsequent vertex register 20.

A condition determination module 40 determines whether the vertex distance is shorter than a predetermined value. If it is determined that the vertex distance is shorter, a vertex selection unit 60 discards the vertex of the subsequent vertex register 20. Then, the condition determination module 40 reads a subsequent vertex in the subsequent vertex register 20. If the vertex distance is sufficiently long, the vertex selection unit 60 specifies the relevant vertex as a drawing target, and the drawing module 50 draws a graphic using the vertex of the previous vertex register 10 and that of the subsequent vertex register 20. Then, the drawing module 50 discards the vertex of the previous vertex register 10 and transfers that of the subsequent vertex register 20 to the previous vertex register 10. Then, the drawing module 50 reads a subsequent vertex in the subsequent vertex register 20. A vertex with an index "n" attached in Fig. 10 is vertices adopted without being omitted and is that of a vertex stored in the previous vertex register 10. A vertex with an index "i" attached is an omitted vertex. An index "i-1" indicates the number of omitted vertices.

Although in the above description, the distance calculation module 30 and condition determination module 40 belong to the first preferred embodiment, it is clear that they are an example of the character amount calculation means and that of a condition determination means for determining whether to meet a threshold condition, respectively. It is clear that in the following preferred embodiments, each of them has a function according to each preferred embodiment. In this preferred embodiment, the graphic drawing module 50 and vertex selection unit 60 correspond to the graphic drawing means of the graphic drawing process means of the present invention.

### <The second preferred embodiment>

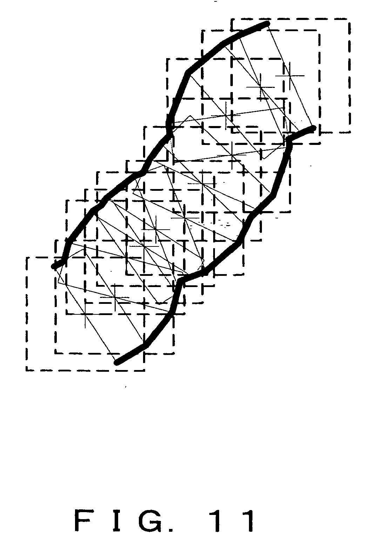

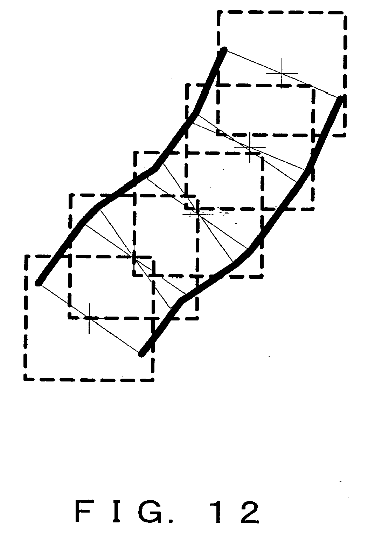

The second preferred embodiment of the present invention is described below with reference to Figs. 11 and 12. The second preferred embodiment of the present invention adopts horizontal and vertical distances between two vertices as the amount of features calculated based on the relative position of two vertices.

In Fig. 11, a square whose center is each vertex coordinate position and the length of whose side is equal to the width of a segment is overlapped on a polyline to be drawn. In this case, it is found that vertices are closely collected from the fact that a plurality of vertices exists in one square. As clear from Fig. 11, the width of a segment is not uniform, and its outlines are ruined.

Fig. 12 shows a polyline in which closely collected vertices each of the horizontal and vertical distances of which is shorter than a predetermined value are omitted in such a way that only one vertex exists in the square shown in Fig. 11. As clear from Fig. 12, the width of a segment is uniform and its beauty is improved.

Geometrically speaking, in the second preferred embodiment, an area which is a boundary for determining about whether a specific vertex should be omitted is defined using a square.

The advantage of the second preferred embodiment over the first preferred embodiment is that in the second preferred embodiment, the near/far-side calculation of the relative position of two vertices can be performed at high speed. In the first preferred embodiment, the respective square of dₓ and d_{y} and square root must be calculated. However, in the second preferred embodiment, only respective subtraction in x and y directions is needed.

### <The third preferred embodiment>

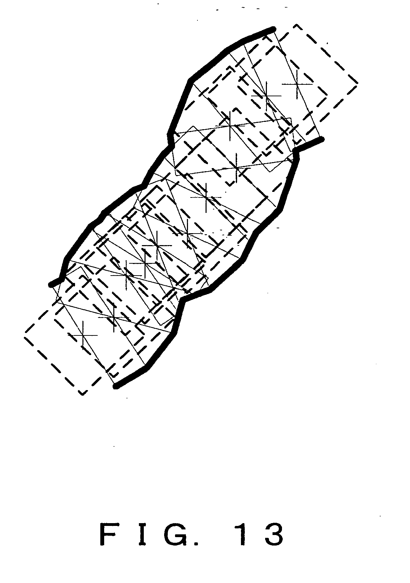

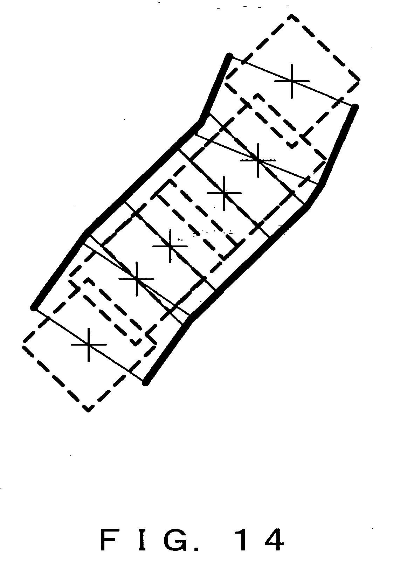

The third preferred embodiment of the present invention is described below with reference to Figs. 13 and 14. Although the third preferred embodiment of the present invention adopts horizontal and vertical distances between two vertices as the amount of features calculated based on the relative position of two vertices like the second preferred embodiment, the third preferred embodiment differs from the second preferred embodiment in that a condition determination is performed based on whether the sum of horizontal and vertical distances between two vertices is equal or less than a predetermined value.

In Fig. 13, a rhombus in which the sum of a distance between its center and a vertex located in its vertical direction and a distance between its center and a vertex located in its horizontal direction is equal to the width of a segment is overlapped on a poly line to be drawn. In this case, it is found that vertices are closely collected from the fact that a plurality of vertices exists in one square. As clear from Fig. 11, the width of a segment is not uniform, and its outlines are ruined.

Fig. 14 shows a polyline in which closely collected vertices are omitted in such a way that only one vertex exists in the rhombus shown in Fig. 13. As clear from Fig. 12, the width of a segment is uniform and its beauty is improved.

Geometrically speaking, in the third preferred embodiment, an area which is a boundary for determining about whether a specific vertex should be omitted is defined using a rhombus.

The advantage of the third preferred embodiment over the first preferred embodiment is that in the second preferred embodiment, the near/far-side calculation of the relative position of two vertices can be performed at high speed. In the first preferred embodiment, the respective square of dₓ and dy and square root must be calculated. However, in the third preferred embodiment, only respective and addition subtraction in x and y directions are needed.

### <The fourth preferred embodiment>

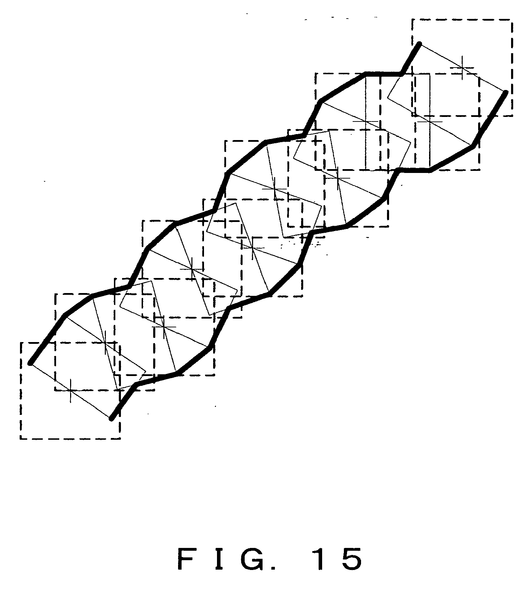

The fourth preferred embodiment of the present invention is described below with reference to Figs. 15 through 17.

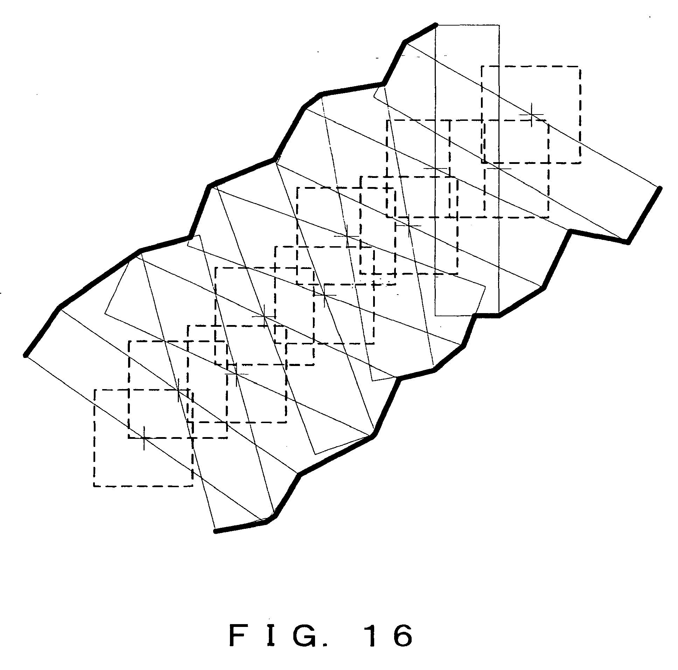

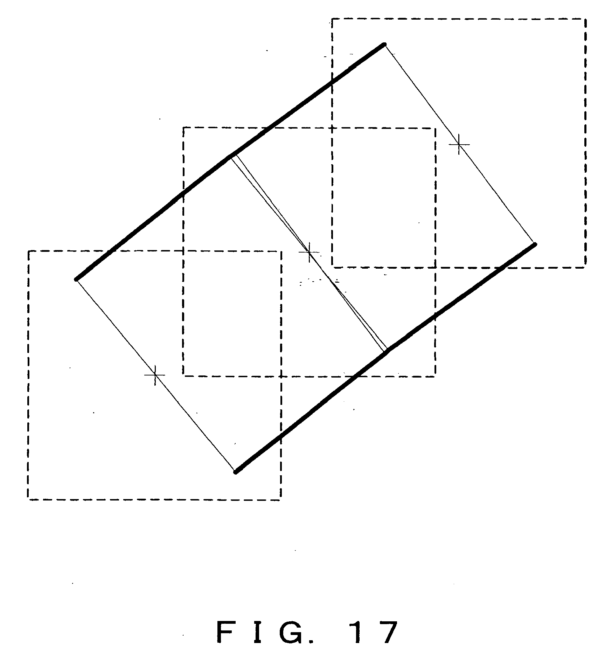

Although in the first through third preferred embodiments, an area which is a boundary for determining about whether a specific vertex should be omitted is defined, in this fourth preferred embodiment, this boundary area is determined based on segment width. In Fig. 15, a rectangle the length of one side of which is "w" is used as the rectangle the length of one side of which is "w" is used as the determination boundary area in the second preferred embodiment, against a segment with a width w. In Fig. 16, a rectangle the length of one side of which is "w" is used as the termination boundary area in the second preferred embodiment as in Fig. 15, against a segment with a width 3w. As known from Fig. 16, a determination boundary area the length of one side of which is "w" is too small against a segment with a width 3w, and the width of a segment is not sufficiently uniform. This is because if the side length of the determination boundary area is insufficient against the width of a segment, a pair of one outline and the other outline becomes the outlines of a different segment or the outlines of the interpolatory graphic of a joint on the left and right sides of the outlines of a broken line made up of a plurality of sub-segments of the segment although it should be essentially determined by the same segment, and the essential outlines of the segment is ruined. However, if as shown in Fig. 17, a rectangle the length of one side of which is 3w is used as the determination boundary area against a segment with a width 3w, the width of a segment becomes properly uniform.

Thus, it is found that the size of the determination boundary area should be set taking into consideration the width of a segment. Although in Figs. 15 and 17, the side length of a rectangle is equal to the width of a segment, geometrically speaking, in order not to ruin the outlines of a segment, it is sufficient for the side length of the determination boundary area is approximately half of the width of a segment. However, if a geometrically exact display is not required and if the recognition of the rough position and shape of a segment is sufficient, by adopting a determination boundary area with dimensions larger than half of the width of a segment and adopting a larger vertex omission rate, the amount of an operation can be reduced and performance can be improved.

### <The fifth preferred embodiment>

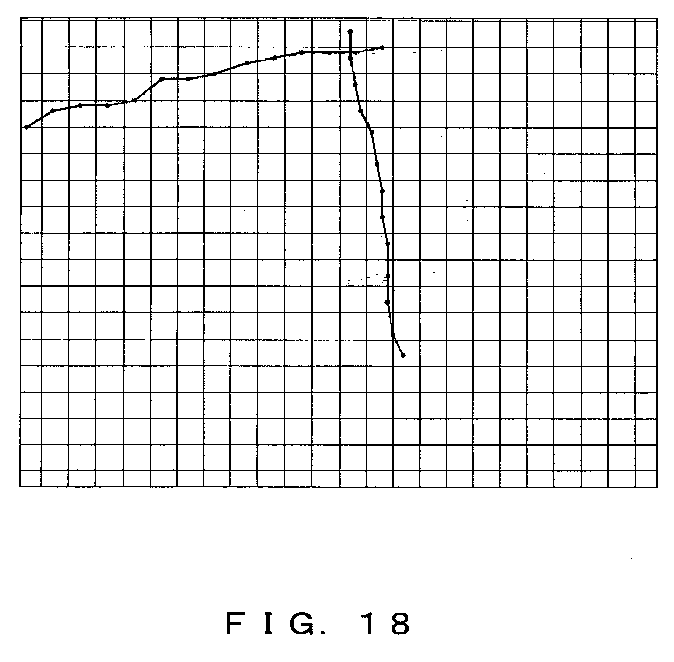

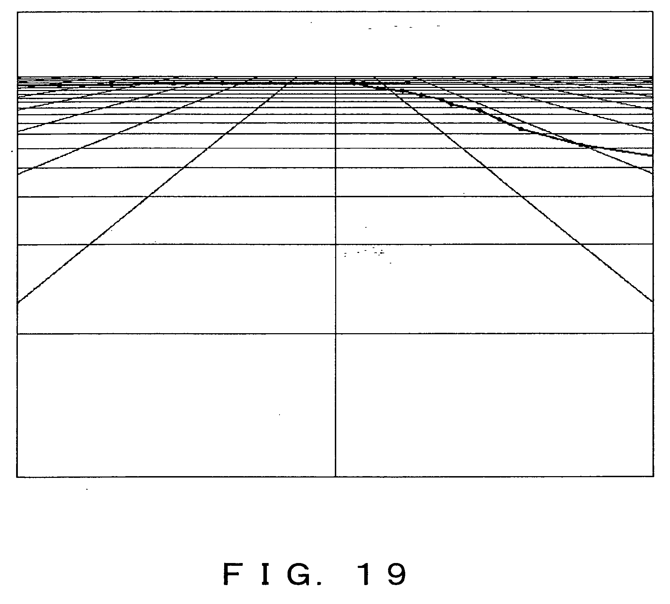

The fifth preferred embodiment of the present invention is described below with reference to Figs. 18 and 19.

Fig. 18 is a view obtained by vertically looking down at the ground surface from the sky like Fig. 1. Fig. 19 is a bird's eye view obtained by matrix-transforming Fig. 18 like Fig. 2. As known from Fig. 19, the degree of grid distortion differs between in the horizontal and vertical directions, and vertices also tend to closely collect in the vertical direction. Therefore, if in the determination boundary area in the second preferred embodiment, a determination reference value in a y-direction distance is larger than one in an x-direction distance, for example, twice or four times as large as one in an x-direction distance, the vertex omission rate of a segment extending in the depth direction can be increased without scarifying shape accuracy so much. Conversely, a determination reference value in an x-direction distance is larger than one in a y-direction distance, for example, twice or four times as large as one in an x-direction distance, the vertex omission rate of a far-side segment horizontally extending can be increased without scarifying shape accuracy so much.

### <The six preferred embodiment>

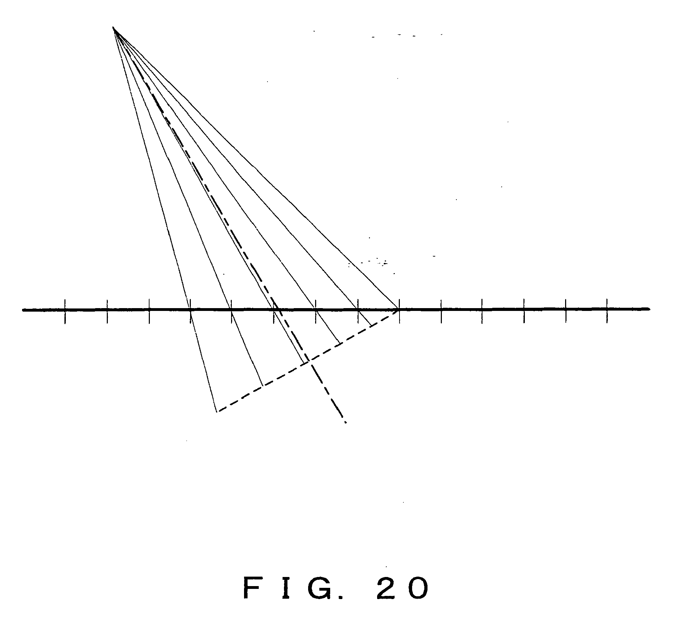

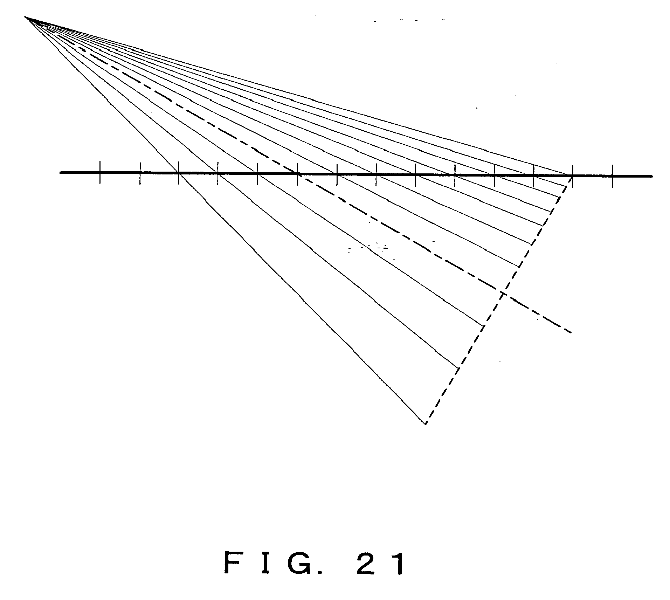

The sixth preferred embodiment of the present invention is described below with reference to Figs. 20 and 21.

Fig. 20 is a bird' s eye view obtained by obliquely looking down at the ground surface at an elevation angle of 60 degrees. Fig. 21 is a bird's eye view obtained by obliquely looking down at the ground surface at an elevation angle of 30 degrees. A point where the tops of a plurality of triangles are converged indicates the position of a visual point. A horizontal line indicates the ground surface. Dotted lines virtually indicate the screen section on the screen, which is an auxiliary line for explaining how the ground surface is distorted by the size of an elevation angle. As an elevation angle formed by a visual line and the ground surface decreases, the density of vertices increases on the far side. Simultaneously, effectiveness accuracy as position information decreases. In this case, the determination reference value for omitting vertices is formed into a function of an elevation angle and is made variable. For example, if the ground surface is looked down from top at an elevation angle of 90 degrees, a minimum omission condition, such as half of segment width is used as the determination reference value of a distance between two vertices. In this case, if the determination reference value is made variable, for example, twice and eight times the segment width in the cases of an elevation angle of 60 and 30 degrees, respectively, vertices on the far side can be omitted with priority, and graphic drawing performance can be improved while the reduction of shape accuracy on the near side being suppressed to a minimum level.

### <The seventh preferred embodiment>

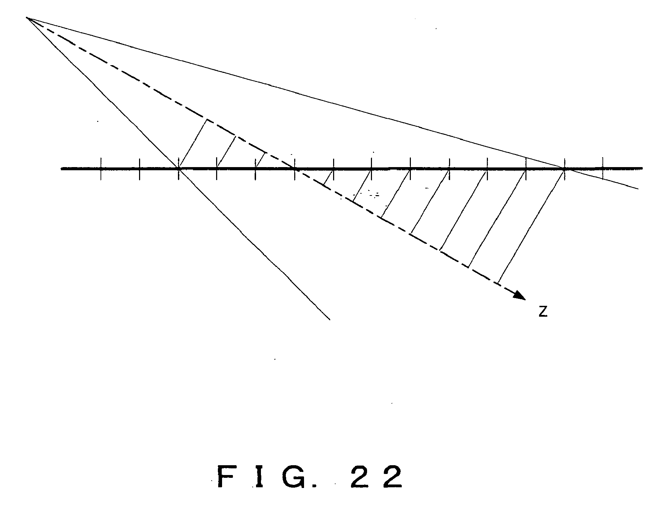

The seventh preferred embodiment of the present invention is described below with reference to Fig. 22.

As described in the sixth preferred embodiment, the density of vertices increases on the far side, as an elevation angle formed by a visual line and the ground surface decreases. In this case, the determination reference value for omitting vertices is formed into a function of the depth of a vertex and is made variable. A vertex on the ground surface is generally given as two-dimensional coordinates, and there is no depth information. However, by the process described when transforming Fig. 2 into Fig. 2, a depth coordinate value occurs in a coordinate system obtained by viewing the screen by a visual line. This is generally described as a z-coordinate value. In Fig. 22, a perpendicular line is drawn from the coordinate values of grid sections arrayed at equal intervals on the ground surface expressed as a horizontal segment up to a segment virtually extended in the visual line direction. A distance of an intersection point of the visual line and perpendicular line from the visual point corresponds to the z-coordinate value. For example, if the z-coordinate value is 10m and the near side is displayed, a minimum omission condition, such as half of segment width, is used as the determination reference value of a distance between two vertices. However, if the z-coordinate value is 2km and the far side is displayed, eight times segment width is used and is made variable, far-side vertices can be omitted with higher priority, and graphic drawing performance can be improved while the reduction of shape accuracy on the near side being suppressed to a minimum level.

### <The eighth preferred embodiment>

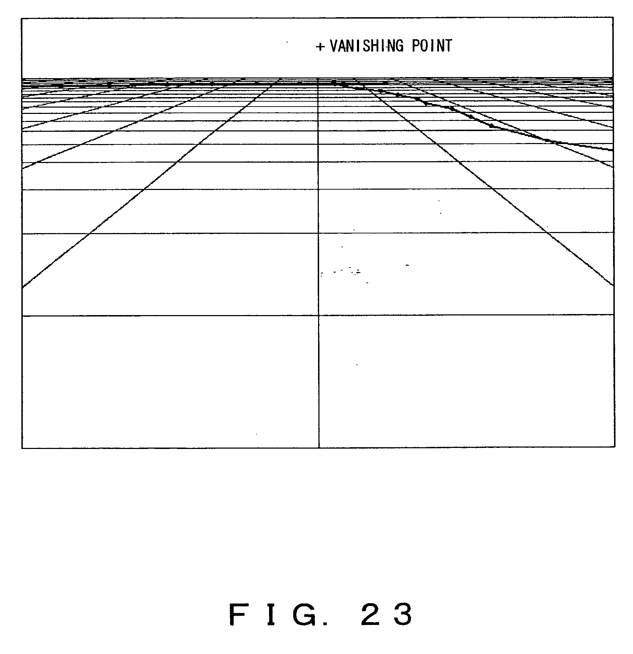

The eighth preferred embodiment of the present invention is described below with reference to Fig. 23.

Fig. 23 is obtained by adding the vanishing point of perspective projection to Fig. 19. As known from Fig. 23, the density of vertices increases as the distance between a vertex and a vanishing point decreases. Simultaneously, effectiveness accuracy as position information decreases. In this case, the determination reference value for omitting vertices is formed into a function of the distance between a vertex and a vanishing point, and is made variable. As described in the description on the advantages of the second and third preferred embodiments over the first preferred embodiment, it is more efficient to divide the distance between two vertices in a horizontal direction x and a vertical direction y and process it than to calculate the distance as it is. For example, if the horizontal and vertical distances between a vertex and a vanishing point are 100 and 50 pixels, respectively, the longitudinal and vertical side lengths of the determination boundary area are made half of and equal to segment width, respectively. If the horizontal and vertical distances between a vertex and a vanishing point are 20 and 10 pixels, respectively, the longitudinal and vertical side lengths of the determination boundary area are made twice and eight times the segment width, respectively.

Although each preferred embodiment has been described above, the combination of these preferred embodiments can be easily anticipated by a person having an ordinary skill in the art, and it is obvious that a more effective effect can be obtained by doing so. For example, the second preferred embodiment is selected for the basic determination boundary area. Then, the asymmetricity between horizontal and vertical directions described in the fifth preferred embodiment is introduced into the determination this boundary area. The horizontal and vertical side lengths of the determination boundary area are determined taking into consideration its distance from the vanishing point described in the eighth preferred embodiment. Furthermore, this determination boundary area side length is made optimal for each of segments with different widths and is made variable using the fourth

### preferred embodiment.

The sixth or seventh preferred embodiment can also be used instead of the eighth preferred embodiment. As known from the bird's eye view shown in Fig. 2 or the like, in the case of the sixth preferred embodiment, as an elevation angle formed by the visual line and the ground surface decreases, a grid on the far side of the visual point is more extremely ruined in the vertical direction than in the horizontal direction. In this case, the horizontal and vertical side lengths of the determination boundary area can be changed at different ratios according to the elevation angle.

In the above description, the determination reference value for omitting vertices is formed into a function of each parameter and is made variable. This function can be properly provided taking into consideration a geometrical theorem or an approximate expression, or how to handle a graphic shape in its application, that is, in what position on the screen a exact shape is required, in what position omission is possible or the like. For example, a linear equation, a multiple polynominal, an exponential function, a logarithmic function, a look-up table or the like can be adopted.

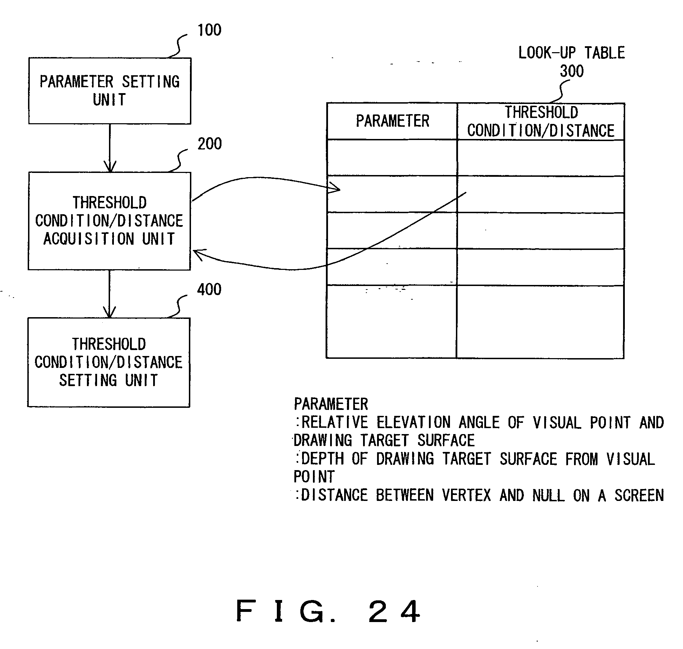

In Fig. 24, a look-up table is adopted, and a means for changing a threshold condition/distance is used. A threshold condition/distance acquisition unit 200 reads a parameter value set in a parameter setting unit 100. Then, the threshold condition/distance acquisition unit 200 obtains a threshold condition/distance corresponding to the read parameter value referring to a look-up table 300, and sets it in a threshold condition/distance setting unit 400.

In the sixth preferred embodiment, the type of a parameter is a relative elevation angle formed by the visual point and a drawing target surface. In the seventh preferred embodiment, it is the depth of the drawing target surface from the visual point. In the eighth preferred embodiment, it is the distance between a vertex and a vanishing point on the screen.

In this example, a condition determining module shown in Fig. 10 performs condition determination, based on a threshold condition/distance set in this threshold condition/distance setting unit 400.

## Claims

1. A vertex reduction graphic drawing method for drawing a segment or polygon which is obtained by connecting a plurality of given vertex coordinates, comprising:
calculating(5) an amount of features, based on a relative position of a previous vertex and an closely located vertex of a graphic to be drawn; and
eliminating(6) the relevant vertex from drawing targets if the amount of features meets a specific threshold condition, and specifying(6) a vertex the amount of features of which does not meet the threshold condition as a subsequent drawing target.

2. The vertex reduction graphic drawing method according to claim 1, wherein
the amount of features is a distance between two vertices, and the threshold condition is that the distance between two vertices is shorter than a threshold distance.

3. The vertex reduction graphic drawing method according to claim 1, wherein
the amount of features is horizontal and vertical distances between two vertices, and the threshold condition is that both of the horizontal distance and the vertical distance are shorter than their threshold distance.

4. The vertex reduction graphic drawing method according to claim 3, wherein
the threshold distance differs in horizontal and vertical directions.

5. The vertex reduction graphic drawing method according to claim 1, wherein
the amount of features is horizontal and vertical distances between two vertices, and the threshold condition is that a sum of the horizontal and vertical distances is shorter than a threshold distance.

6. The vertex reduction graphic drawing method according to claim 1, wherein
the threshold condition is determined by a width of a segment to be drawn.

7. The vertex reduction graphic drawing method according to claim 1, wherein
the plurality of given vertex coordinates is obtained by transforming vertex coordinates on a specific flat view into ones in a bird's eye view, and the threshold condition is changed according to a relative elevation angle of a visual point and a drawing target surface in the bird's eye view.

8. The vertex reduction graphic drawing method according to claim 4, wherein
the plurality of given vertex coordinates is obtained by transforming vertex coordinates on a specific flat view into ones in a bird's eye view, and the horizontal and vertical threshold distances are changed according to a relative elevation angle of a visual point and a drawing target surface in the bird' s eye view.

9. The vertex reduction graphic drawing method according to claim 1, wherein
the plurality of given vertex coordinates is obtained by transforming vertex coordinates on a specific flat view into ones in a bird's eye view, and the threshold condition is changed according to a depth of a drawing target surface from a visual point in the bird's eye view.

10. The vertex reduction graphic drawing method according to claim 4, wherein
the plurality of given vertex coordinates is obtained by transforming vertex coordinates on a specific flat view into ones in a bird's eye view, and the horizontal and vertical threshold distances are changed according to a depth of a drawing target surface from a visual point in the bird's eye view.

11. The vertex reduction graphic drawing method according to claim 1, wherein
the plurality of given vertex coordinates is obtained by transforming vertex coordinates on a specific flat view into ones in a bird's eye view, and the threshold condition is changed according to a distance between a vertex and a vanishing point in the bird's eye view on a screen.

12. The vertex reduction graphic drawing method according to claim 4, wherein
the plurality of given vertex coordinates is obtained by transforming vertex coordinates on a specific flat view into ones in a bird's eye view, and the horizontal and vertical threshold distances are changed according to a distance between a vertex and a vanishing point in the bird's eye view on a screen.

13. A vertex reduction graphic drawing device for drawing a segment or polygon which is obtained by connecting a plurality of given vertex coordinates, comprising:
a unit(5) for calculating an amount of features, based on a relative position of a previously drawn vertex and an closely located vertex to it ; and
a unit (6) for eliminating the relevant vertex from drawing targets if the amount of features meets a specific threshold condition, and specifying a vertex the amount-of features of which does not meet the threshold condition as a subsequent drawing target.

14. The vertex reduction graphic drawing device according to claim 13, wherein
the amount of features is a distance between two vertices, and the threshold condition is that the distance between two vertices is shorter than a threshold distance.

15. The vertex reduction graphic drawing device according to claim 13, wherein
the amount of features is horizontal and vertical distances between two vertices, and the threshold condition is that both of the horizontal distance and the vertical distance are shorter than their threshold distance.

16. The vertex reduction graphic drawing device according to claim 15, wherein
the threshold distance differs in horizontal and vertical directions.

17. The vertex reduction graphic drawing device according to claim 13, wherein
the amount of features is horizontal and vertical distances between two vertices, and the threshold condition is that a sum of the horizontal and vertical distances is shorter than a threshold distance.

18. The vertex reduction graphic drawing device according to claim 13, wherein
the threshold condition is determined by a width of a segment to be drawn.

19. The vertex reduction graphic drawing device according to claim 13, further comprising:
a unit for transforming a segment or a polygon which is obtained by connecting a plurality of given vertex coordinates in a bird's eye view; and
a unit for changing the threshold distance according to a relative elevation angle of a visual point and a drawing target surface in the bird's eye view.

20. The vertex reduction graphic drawing device according to claim 16, further comprising:
a unit for transforming a segment or a polygon which is obtained by connecting a plurality of given vertex coordinates in a bird's eye view; and
a unit for changing the threshold distance according to a relative elevation angle of a visual point and a drawing target surface in the bird's eye view.

21. The vertex reduction graphic drawing device according to claim 13, further comprising
a unit for transforming a segment or a polygon which is obtained by connecting a plurality of given vertex coordinates in a bird's eye view; and
a unit for changing the threshold distance according to a depth of a drawing target surface from a visual point in the bird's eye view.

22. The vertex reduction graphic drawing device according to claim 16, further comprising
a unit for transforming a segment or a polygon which is obtained by connecting a plurality of given vertex coordinates in a bird's eye view; and
a unit for changing the threshold distance according to a depth of a drawing target surface from a visual point in the bird's eye view.

23. The vertex reduction graphic drawing device according to claim 13, further comprising:
a unit for transforming a segment or a polygon which is obtained by connecting a plurality of given vertex coordinates in a bird's eye view; and
a unit for changing the threshold distance according to a distance between a vertex and a vanishing point in the bird's eye view on a screen.

24. The vertex reduction graphic drawing device according to claim 16, further comprising:
a unit for transforming and displaying a segment or a polygon which is obtained by connecting a plurality of given vertex coordinates in a bird's eye view; and
a unit for changing the threshold distance according to a distance between a vertex and a vanishing point in the bird's eye view on a screen.

25. A computer readable medium storing a vertex reduction graphic drawing program for enabling a computer to execute a graphic drawing method for drawing a segment or a polygon which is obtained by connecting a plurality of given vertex coordinates, said program comprising:
calculating an amount of features, based on a relative position of a previously drawn vertex and an closely located vertex to it; and
eliminating the relevant vertex from drawing targets if the amount of features meets a specific threshold condition, and specifying a vertex the amount of features of which does not meet the threshold condition as a subsequent drawing target.

26. A vertex reduction graphic drawing device for drawing a segment or polygon which is obtained by connecting a plurality of given vertex coordinates, comprising:
means(6) for calculating an amount of features, based on a relative position of a previously drawn vertex and an closely located vertex to it; and
means (6) for eliminating the relevant vertex from drawing targets if the amount of features meets a specific threshold condition, and specifying a vertex the amount of features of which does not meet the threshold condition as a subsequent drawing target.
